# EUROPÄISCHE PATENTANMELDUNG

(11) **EP 4 757 139 A1**
(43) Veröffentlichungstag der Anmeldung: **10.06.2026**
(21) Anmeldenummer: 24217004.1
(22) Anmeldetag: 03.12.2024
(51) Int. Cl.: H02K 11/33, H02K 5/18, H02K 5/16, H02K 5/22

(54) **ANTRIEB MIT EINEM MOTORINTEGRIERTEN UMRICHTER UND EINEM HYBRIDLAGERSCHILD**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner mbB

(57) **Zusammenfassung**

Die Erfindung betrifft einen Antrieb (30) mit
- zumindest einer dynamoelektrischen rotatorischen Maschine (1), die in einem Gehäuse (2) angeordnet ist, mit einem in einem Stator (4) angeordneten Wicklungssystem (5) und einem durch einen Luftspalt (23) davon getrennten Rotor (6), der über zumindest ein Lager (10) eines B-seitigen topfähnlichen Lagerschilds (7) um eine Achse (12) drehbar gelagert ist,
- zumindest einem Umrichter, wobei der Umrichter zumindest einige der folgenden Bauelemente, wie Leistungshalbleiter, Drosseln, Kondensatoren, Steuer- und Regeleinheiten und Kommunikationseinheiten in einem Bauvolumen aufweist, die zumindest abschnittsweise von dem B-seitigen Lagerschild (7) radial umgeben sind und dabei zumindest einige Bauelemente des Umrichters mit dem Lagerschild (7) thermisch leitend verbunden sind, indem insbesondere wärmeintensive Bauelemente (13) des Umrichters, an einer Innenseite (20) der Seitenwand (19) des topfähnlichen Lagerschildes (7) angeordnet sind,
- wobei der Umrichter, axial betrachtet, zwischen der dynamoelektrischen rotatorischen Maschine (1) und dem Lager des B-seitigen topfähnlichen Lagerschilds (7) angeordnet ist.

## Beschreibung

Die Erfindung betrifft einen Antrieb mit einer dynamoelektrischen Maschine und einem Umrichter, die axial hintereinander in einem Innenraum der dynamoelektrischen Maschine angeordnet sind, wobei also der Antrieb als motorintegrierten Umrichter ausgeführt ist.

Für drehzahlveränderbare dynamoelektrische Maschinen, wie Elektromotoren, vor allem Synchron-, Asynchron-, und Reluktanzmotoren werden Umrichter zum Einstellen eines gewünschten Betriebsverhaltens der Maschine benötigt.

Beim Betrieb dieser Antriebe entsteht Verlustwärme im Inneren der Maschine und des Umrichters, welche in der Regel u.a. über deren Gehäuse abgeführt werden muss.

Diese erforderlichen Umrichter werden für gewöhnlich in eigenen Schaltschränken vorgesehen oder sind auch außen am Gehäuse der dynamoelektrischen Maschine angebaut. Hierbei gibt es verschiedene Varianten den Umrichter am Gehäuse anzubauen. Zum Beispiel als Aufsatz mit eigener Belüftung oder auch mit integrierter Belüftung durch einen vorhandenen Motorlüfter.

Aktuell wird die Leistungselektronik eines Umrichters vorwiegend in einem eigenen Gehäuse außen am Motor angebracht. Diese haben dann auch eine eigene Belüftung. Ebenso kann der Umrichter in eigenen Schaltschränken thermisch entkoppelt vom Motor angeordnet werden. Hier muss aber ebenfalls eine gute Kühlung erfolgen. Für Antriebe mit einem Motor-Umrichtersystem mit hohen Wirkungsgradanforderungen ist eine gute Kühlung bzw. Wärmeabfuhr zwingend erforderlich.

Ein derartiger Antrieb ist beispielsweise aus der DE 198 12 729 A1 bekannt. Dort ist ein Elektromotor beschrieben, insbesondere mit einem Lüfterrad zur Bildung eines Axial- oder Radiallüfters. Diese Antriebseinheit weist ein Steuerungsgehäuse mit einer Steuereinheit auf, wobei die Antriebseinheit einen Stator, ein Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Ebenso ist eine derartige Anordnung aus der DE 38 42 588 A1 bekannt. Dort ist ein kollektorloser Gleichstrom-Außenläufermotor beschrieben, der aus einem an einem Motorflansch befestigten Stator mit Statorwicklungen, einem den Stator auf seiner dem Motorflansch abgekehrten Seite umschließenden Außenläufer, sowie einer elektronischen, die Statorwicklungen ansteuernden Schaltungsanordnung besteht. Diese Schaltungsanordnung besitzt eine flanschseitig dem Stator zugekehrten angeordnete, elektronischen Bauelemente tragende Leiterplatte sowie mehrere an der Leiterplatte elektrisch angeschlossene, in wärmeleitendem Kontakt mit dem Motorflansch angeordnete Leistungshalbleiter. Die Leistungshalbleiter sind mittelbar über einen ringscheibenförmigen Kühlkörper mit dem Motorflansch wärmeleitend verbunden.

Diese Ausführungen der Montage direkt am Motor benötigen vergleichsweise viel Bauraum, machen den Antrieb damit groß und schwer und weisen eine ungenügende Kühlung, insbesondere für einige Komponenten des Umrichters auf.

Ausgehend davon liegt der Erfindung die Aufgabe zugrunde, einen kompakten, einfach aufgebauten Antrieb für vielfältige Anwendungen und verbessertem Kühlverhalten zu schaffen.

Die Lösung der gestellten Aufgabe gelingt durch einen Antrieb gemäß den Merkmalen des unabhängigen Anspruchs.

Vorteilhafte Ausgestaltungen sind den abhängigen Ansprüchen zu entnehmen.

Erfindungsgemäß ist der Antrieb mit zumindest einer dynamoelektrischen rotatorischen Maschine, einer Synchronmaschine, Asynchronmaschine oder Reluktanzmaschine ausgestattet, die in einem Gehäuse angeordnet ist. Ein in das Gehäuse eingeschrumpfter oder eingepresster Stator weist in seinem im Wesentlichen axial verlaufenden Nuten ein Wicklungssystem auf, das bei Bestromung mit einem, durch eine Luftspalt getrennten Rotor aufgrund elektromagnetischer Wechselwirkungen ein Drehmoment erzeugt.

Diese Einpassung des Stators schafft einen vergleichsweise guten Wärmeübergang vom Blechpaket des Stators auf das Gehäuse und optionalen Gehäuserippen bzw. Kühlrippen am Gehäuse. Der Rotor ist über zumindest ein Lager eines B-seitigen topfähnlichen Lagerschilds um seine Achse drehbar gelagert.

Bei einer dynamoelektrischen Maschine, wie einem Motor gibt es eine A-Seite (Antriebsseite; Drive-End; DE-Seite), deren eines Wellenende zu Wellenanbauelementen, wie Antriebselementen und/oder einer Arbeitsmaschine weist und mit dieser Arbeitsmaschine mechanisch gekoppelt wird. Arbeitsmaschinen sind beispielsweise Kompressoren, Lüfter, Verdichter oder Pumpen. Die B-Seite des Motors liegt am anderen Wellenende (Non-Drive-End; NDE-Seite).

Des Weiteren weist der Antrieb zumindest einen Umrichter auf, der je nach Ausführung als Umrichter mit Zwischenkreis, als Direktumrichter etc. zumindest einige der folgenden Bauelemente, wie Leistungshalbleiter, Drosseln, Kondensatoren, Steuer- und Regeleinheiten und Kommunikationseinheiten aufweist.

Zumindest das B-seitige Lagerschild ist topfähnlich ausgeführt, dabei ist die Seitenwand aus einem anderen Material als der Topfboden dieses Lagerschildes. Die Seitenwand ist aus einem thermisch vergleichsweise gut leitenden Material, zumindest aber aus einem Material mit einer besseren thermischen Leitfähigkeit als der Topfboden des Lagerschildes. Zumindest einige Bauelemente des Umrichters sind zumindest abschnittsweise von der Seitenwand des B-seitigen Lagerschildes umgeben und mit dieser Seitenwand thermisch leitend verbunden. Besonders vorteilhaft ist es, wenn die wärmeintensiven Bauelemente des Umrichters, wie die Leistungselektronik, an der Innenseite der Seitenwand des topfähnlichen Lagerschilds angeordnet sind.

Diese B-seitige Lagerschild ist somit als Hybridlagerschild ausgebildet, dessen Teile, wie Seitenwand und Topfboden an die jeweilige Anforderung optimal angepasst sind. Dabei ist die Seitenwand vorzugsweise aus stranggepresstem Aluminium und der Topfboden aus druckgegossenem Aluminium.

Das Hybridlagerschild weist somit an der Außenseite seiner Seitenwand Rippen zur Kühlung und der Innenseite seiner Seitenwand Geometrien zur Aufnahme bzw. thermischen Anbindung der Leistungselektronik auf. Der Topfboden des B-seitigen Lagerschildes und insbesondere der Nabenbereich ist aus druckgegossenem Aluminium für die Befestigung weiterer Elektronikkomponenten des Umrichters und dient als Lagernabe zur Aufnahme des B-seitigen Lagers.

Durch den Einsatz eines Hybridlagerschildes können somit die besten Eigenschaften der Materialien an der richtigen Stelle vor allem des B-seitigen Lagerschildes eingesetzt werden.

Wird die Leistungselektronik in das Lagerschild integriert, so müssen die Bauteile mit den größten Verlusten am besten gekühlt werden. Diese Bauelemente, insbesondere IGBTs sind demnach an die vergleichsweise gut wärmeleitende Seitenwand des B-seitigen Lagerschildes thermisch angebunden. Die Außenseite der Seitenwand kühlt somit in Verbindung mit einer Luftkühlung und/oder Kühlrippen die Leistungselektronik.

Die Seitenwand des B-seitigen Lagerschildes ist aus Strangpressaluminium und weist einen Wärmeleitwert von 200-220 W/mK auf. Im Topfboden, insbesondere dem Nabenbereich des B-seitigen-Lagerschildes wird Aluminiumdruckguss eingesetzt, welches die erforderliche Festigkeit aufweist und verschiedene erforderliche Geometrien für die Lageraufnahme und die Steuerungskomponenten des Umrichters zulässt. Die Seitenwand hat damit gegenüber dem gegossenen Aluminium im Nabenbereich bzw. dem Topfboden des B-seitigen Lagerschildes einen um 100 W/mK höheren thermischen Leitwert.

Beide Teile des B-seitigen Lagerschildes, wie Seitenwand und Topfboden werden im Vorfeld miteinander verbunden. Vorzugsweise sind dabei bereits die Bauelemente des Umrichters an den Seitenwänden bzw. dem Topfboden des B-seitigen Lagerschildes montiert, sodass nach diesem Verbinden die Montage des bestückten B-seitigen Lagerschildes an die B-Seite der dynamoelektrischen Maschine stattfinden kann. Mit dieser Montage findet dann auch gleichzeitig die elektrische Kontaktierung des Umrichters an das Wicklungssystem des Stators über geeignete Kontaktverbindungen statt.

Dieses Verbinden von Seitenwand und Topfboden kann durch Schweißen, Kleben, Schrauben, Schrumpfen, oder direktes Angießen erfolgen. Im Vergleich zu dem gegossenen Aluminium (120 W/mK) hat das stranggepresste Aluminium der Seitenwand einen um 100 W/mK höheren Leitwert.

Durch den Strangpressprozess der Seitenwand können die Kühlrippen der Seitenwand sehr filigran (Rippendicke ca. 1 mm) ausgeführt werden. Dies erhöht die thermisch aktive Oberfläche und trägt somit zu einer verbesserten Kühlung der dort thermisch angebundenen Bauelemente an der Innenseite der Seitenwand bei.

Falls eine mechanische Bearbeitung des B-seitigen-Lagerschildes (z.B. Lagersitz etc.) notwendig sein sollte, kann das gesamte B-seitige-Lagerschild in einer Aufspannung erfolgen. Dies ist möglich, da die beiden Lagerschildkomponenten - Seitenwand und Topfboden - im Rohzustand schon miteinander verbunden wurden. Damit kann insgesamt eine bessere Qualität und geringere Herstellungskosten der dynamoelektrischen Maschine erzielt werden.

Die Leistungshalbleiter des Umrichters, wie z.B. IGBTs, als besonders wärmeintensive Bauelemente des Umrichters stehen in thermisch direkt leitfähigem Kontakt mit dem mit der Seitenwand des topfähnlichen B-seitigen-Lagerschildes. Damit ist eine direkte wärmetechnische Kopplung an die Seitenwände des topfähnlichen Lagerschildes gegeben, sodass die Wärmeabfuhr aus dem Umrichter insbesondere über die Seitenwand, die einen vergleichsweise guten thermischen Leitwert aufweist nach außen erleichtert wird.

Eine thermische Anbindung der Leistungshalbleiter des Umrichters, wie der IGBTs gelingt, indem die IGBTs in axial verlaufenden, tangential ausgerichteten Taschen an der inneren Seitenwand des topfähnlichen Lagerschilds angeordnet sind.

Ergänzend oder alternativ kann durch einen wärmeleitfähigen Verguss die thermische Anbindung der Leistungshalbleiter des Umrichters mit der Innenseite der Seitenwand des Lagerschildes verbessert werden.

Der Umrichter ist axial betrachtet zwischen der dynamoelektrischen rotatorischen Maschine und dem Lager des B-seitigen topfähnlichen Lagerschilds angeordnet.

Mittels eines Stranggussverfahren kann also die Seitenwand des Lagerschildes mit auf der Innenseite und/oder Außenseite der Seitenwand des Lagerschildes mit verschiedensten Geometrien versehen werden, wie z.B. plane Flächen oder Taschen, so dass u.a. die IGBTs ohne zusätzliches Verschrauben an der Innenseite befestigt werden können. Dies kann durch Klipsen, Verspannen oder Einschieben der IGBTs in eine konische Schiene der Tasche oder ähnliches erfolgen. Zur Fixierung der IGBTs und zum besseren Abtransport der Verlustenergie werden diese optional noch mit speziellem wärmeleitfähigem Harz vergossen bzw. verklebt.

Eine optional zusätzliche Lüftereinheit, die als Eigen- und/oder Fremdbelüftung ausgeführt ist und die einen Luftstrom, zumindest abschnittsweise um das Lagerschild und/oder das Gehäuse schafft, verbessert zusätzlich die erforderliche Kühlwirkung. Diese Lüftereinheit ist in axialer Verlängerung an der NDE-Seite anbringbar.

Axial und/oder radial ausgerichtete Kühlrippen am Lagerschild (Topfboden und/oder Seitenwand) und/oder Gehäuse der dynamoelektrischen rotatorischen Maschine steigern die Kühleffizienz des Antriebs.

Diese Kühlrippen an der Außenseite der Seitenwand des B-seitigen-Lagerschildes bewirken somit eine sehr gute Kühlung vor allem der an die Seitenwand thermisch gekoppelten Bauelemente. Die Kühlrippen sind ideal im Kühlluftstrom der Lüftereinheit angeordnet und sorgen somit für eine hocheffizienten Abtransport vor allem der umrichterseitig erzeugten Verlustenergie.

Die axial verlaufenden Kühlrippen von Lagerschild und Gehäuse sind entweder axial fluchtend oder um einen vorgegebenen Winkelversatz versetzt ausgerichtet, um je nach Ausführung die Kühlleistung zu verbessern. Umfänglicher Versatz der Kühlrippen von Gehäuse und Lagerschild um ca. einen halben Abstand zwischen zwei Gehäuserippen erhöht Verwirbelungen einer Luftströmung, sodass u.a. eine turbulente Strömung eine verbesserte Kühlwirkung erzielt.

Es wird die somit die gesamte besonders verlustbehaftete Leistungselektronik direkt an der Innenseite der Seitenwand angebracht. Die weniger verlustbehafteten Komponenten, wie Sensoreinrichtung oder Kommunikationseinrichtungen können auch am Topfboden angebracht sein. Durch die Integration der Leistungselektronik in das Lagerschild und somit in den Motorinnenraum, werden erfindungsgemäß sehr viele Funktionen (Aufnahme des Lagers, Fixierung der Leistungs- und der Steuerelektronik etc.) zusammengefasst und damit der Freiraum im Motorinnenraum ideal ausgenutzt.

Zudem können auch Befestigungsgewinde vor allem im Topfboden des Lagerschildes mit eingebracht werden, um weitere modulare Anbauten, wie Sensoreinrichtungen und/oder Kommunikationseinrichtungen anzubringen.

Das Lager auf der NDE-Seite, insbesondere ein Kugellager kann somit erfindungsgemäß einfach axial von außen montiert bzw. bei einem Lagerwechsel demontiert werden. Dies gestattet auch eine sehr gute Austauschbarkeit im Fehlerfall, ohne den Motor von der Arbeitsmaschine auf der A-Seite trennen zu müssen und/oder den Umrichter ausbauen zu müssen.

Der Umrichter bzw. das Bauvolumen des Umrichters weist im Innenraum des Lagerschildes mittig einen Durchgang für die Welle auf. Die Leistungselektronik des Umrichters kann dabei relativ nahe an der welle angeordnet werden (Durchmesser Motorwelle + 1mm = Wellendurchgang in dem Umrichter), da nicht wie sonst üblich ein vergleichsweise großer Durchgang für das Lager bereitzustellen ist. Das schafft zusätzliches Bauvolumen für Bauelemente des Umrichters im Lagerschild und führt deshalb zu einem Antrieb mit einem Motor-Umrichter System, das vor allem axial noch kompakter gestaltet ist.

Ebenso ist denkbar, dass bei einer lösbaren Verbindung von Topfboden und Seitenwand, für Wartungszwecke lediglich der Topfboden abgenommen werden muss.

Das Lagerschild weist somit erfindungsgemäß eine Funktionsintegration u.a. von Leistungselektronik im Motorinnenraum auf. Die Bauelemente des Umrichters benötigen kein eigenes Gehäuse, weil alle Befestigungspunkte in das B-seitige-Lagerschild integriert sind. Dadurch wird der Bauraum des Motors optimal ausgenutzt und es entsteht ein Antrieb mit einem kompakten Motor-Umrichtersystem.

Es besteht keine Behinderung eines Modulkonzeptes auf der NDE Seite des Motors, d.h. alle denkbaren Anbauten an das NDE-Wellenende, wie Bremse, Eigenlüfter, Fremdlüfter, oder ein Geber, wie z.B. ein Drehimpulsgeber sind weiter möglich.

Dieses Umrichtersystem kontaktiert über seinen Eingangsstromrichter und ein Klemmbrett eines Klemmenkasten des Motors die Netzspannung, während die Ausgangsseite des Umrichtersystems mit dem Wicklungssystem des Motors kontaktiert ist. Diese Kontaktierungen erfolgen vorzugsweise beim Anbau des Lagerschildes an das Gehäuse.

Das B-seitige-Lagerschild ist - wie oben ausgeführt - im Wesentlichen topfförmig ausgestaltet. Der Topfboden weist eine Aussparung auf, durch die die Welle ragt, die u.a. die Antriebswelle der Kühleinheit, insbesondere eines Lüfters bilden kann. An diese Welle sind ggf. auch die oben gewähnten Anbauten drehfest anbringbar. Die Seitenwand weist an ihrer umfänglichen Außenseite axial erstreckende Rippen auf. Die Innenseite der Seitenwand des topfförmig ausgeführten Lagerschildes ist vorzugsweise polygonal ausgeführt, um insbesondere den Leistungshalbleitern dort eine plane Anlagefläche bieten zu können und sie damit möglichst nahe an der Wärmesenke einfach anordnen zu können. Damit wird eine vergleichsweise thermisch gute Anbindung dieser Bauelemente an der Seitenwand des Lagerschildes gewährleistet.

Das Umrichtersystem weist je nach Ausführung somit Leistungshalbleiter, Drosseln, Kondensatoren, Steuer- und Regeleinheiten und Kommunikationseinheiten auf, die in dem vorgegebenen Bauvolumen untergebracht sind. Vorzugsweise sind vor allem die großen Wärmequellen, wie z.B. die Leistungshalbleiter der Eingangs- und Ausgangsstromrichter an der inneren Seitenwand des topfähnlich ausgebildeten B-seitigen-Lagerschildes mit einem vergleichsweise geringen Wärmeübergangswiderstand thermisch gekoppelt.

Der Stator erzeugt ebenso Wärme, die u.a. den Innenraum der dynamoelektrischen rotatorischen Maschine aufheizt. Dieser Wärmeeintrag wird ebenfalls durch die das Gehäuse und die Lagerschilde umströmende Luft abgeführt. Des Weiteren ist der Stator vorzugsweise in einen Mantel des Gehäuses eingeschrumpft, um einen vergleichsweise guten Wärmeübergang vom Blechpaket des Stators auf das Gehäuse und die Gehäuserippen zu erhalten.

Eine insbesondere als Eigenlüfter ausgeführte Kühleinheit generiert im Betrieb der dynamoelektrischen rotatorischen Maschine einen Kühlluftstrom, der zunächst radial entlang des Topfbodens des Lagerschildes und danach die äußere Seitenwand des Lagerschildes geführt ist. Eine Lüfterhaube, die sich axial in Richtung A-Lager erstreckt, führt den Kühlluftstrom auch entlang der Kühlrippen von B-seitigem-Lagerschild und Gehäuse der dynamoelektrischen rotatorischen Maschine.

Die Erfindung sowie weitere vorteilhafte Ausgestaltungen der Erfindung werden anhand prinzipieller dargestellter Ausführungsbeispiele näher dargestellt; darin zeigen:
- FIG 1: eine perspektivische Darstellung des motorintegrierten Umrichters,
- FIG 2: einen prinzipiellen Längsschnitt des motorintegrierten Umrichters mit Hybridlagerschild,
- FIG 3: einen Querschnitt des Hybridlagerschildes,
- FIG 4: einen prinzipiellen Längsschnitt des Hybridlagerschildes.

Es sei angemerkt, dass sich Begriffe wie "axial", "radial", "tangential" etc. auf die in der jeweiligen Figur bzw. im jeweils beschriebenen Beispiel zum Einsatz kommende Achse 12 beziehen. Mit anderen Worten beziehen sich die Richtungen axial, radial, tangential stets auf eine Achse 12 des Rotors 6 und damit auf die entsprechende Symmetrieachse des Stators 4. Dabei beschreibt "axial" eine Richtung parallel zur Achse 12, "radial" beschreibt eine Richtung orthogonal zur Achse 12, auf diese zu oder auch von ihr weg, und "tangential" ist eine Richtung, die in konstantem radialem Abstand zur Achse 12 und bei konstanter Axialposition kreisförmig um die Achse 12 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 6 und Stator 4, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

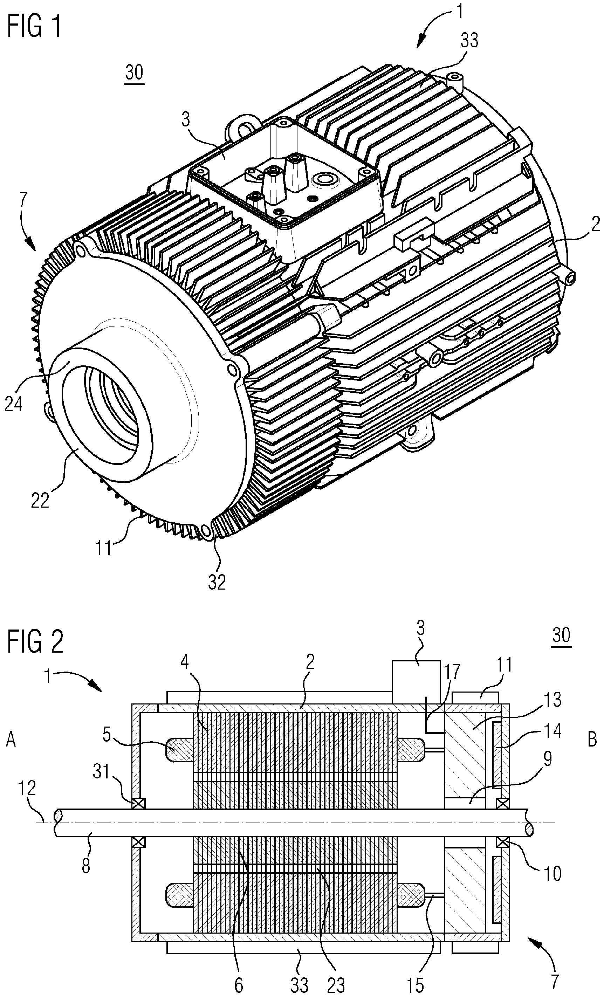

FIG 1 zeigt eine perspektivische Darstellung eines Antriebs 30 mit einem motorintegrierten Umrichter, bei der die Lageraufnahme des einen Lagers 10 tubusförmig am Topfboden 22 des Lagerschildes 7 ausgebildet ist. Sowohl auf der A-Seite als auch auf der B-Seite ragt die Welle 8 aus dem Antrieb 30, wie dies vor allem FIG 2 auch zu entnehmen ist. Auf der A-Seite ist eine nicht näher dargestellte Arbeitsmaschine, wie z.B. ein Kompressor oder eine Pumpe anschließbar. Auf der B-Seite sind nicht näher dargestellte modulartige Anbauten wie eine Bremseinheit, ein Fremdlüftermodul, oder ein Geber bzw. Drehimpulsgeber anbringbar.

FIG 2 zeigt in einem Längsschnitt den Antrieb 30 mit einer dynamoelektrischen rotatorischen Maschine 1 und einem Umrichter. Die dynamoelektrische rotatorische Maschine 1 weist einen Stator 4 auf, der aus axial geschichteten Blechen ein Blechpaket bildet. In im Wesentlichen axial verlaufenden Nuten des Blechpakets des Stators 4 ist ein, einem Luftspalt 23 zugewandtes Wicklungssystem 5 angeordnet, das an den Stirnseiten des Blechpakets des Stators 4 Wickelköpfe ausbildet. Drehfest mit einer Welle 8 ist ein Blechpaket eines Rotors 6 verbunden, das in elektromagnetischer Wechselwirkung mit dem bestromten Wicklungssystem 5 des Stators 4 steht und so zu einer Rotation der Welle 8 um eine Achse 12 führt. Die Welle 8 ist in zwei Lagern 10, 31 drehbar gehalten, einem AS-Lager 31 und einem BS-Lager 10.

Der Rotor 6 kann als Asynchronläufer, permanenterregter Läufer oder Reluktanzläufer ausgeführt sein.

Die dynamoelektrische rotatorische Maschine 1 ist von einem Gehäuse 2 umgeben, das an den Stirnseiten von Lagerschilden begrenzt ist. Das B-seitige-Lager 10 ist von seinem B-seitigen topfartig ausgestalteten Lagerschild 7 gehalten. Das Gehäuse 2 und das B-seitigen topfartig ausgestalteten Hybridlagerschild 7 weisen an ihrem Außenumfang axial verlaufende Kühlrippen 33, 11 auf.

Das B-seitige Lagerschild 7 ist über seine Seitenwand 19 und dem Topfboden 22 über Befestigungselemente 32 mit dem Gehäuse 2 der dynamoelektrischen rotatorischen Maschine 1 mechanisch verbunden. Ein der die dynamoelektrische rotatorische Maschine 1 speisender Umrichter, mit folgenden Bauelemente, wie z.B. Leistungshalbleiter, Drosseln, Kondensatoren, Steuer- und Regeleinheiten 14 und Kommunikationseinheiten ist in dem Bauvolumen des Lagerschildes 7 untergebracht. Eine Kontaktierung der jeweils relevanten Bauelemente des Umrichters zu einem Klemmenkasten 3 oder zu dem Wicklungssystem 5 erfolgt über Kontaktierungselemente17, 15.

Eine Verdrahtung von Leistungs- bzw. Steuerelektronik 14 wird vorzugsweise über den Klemmenkasten 3 realisiert.

Der Umrichter bzw. seine Bauelemente ist ortsfest an der Innenseite 20 der Seitenwand und/oder am Topfboden angebracht und weisen einen Wellendurchgang 9 auf, der lediglich ca. 1mm zur Welle 8 beabstandet ist. Aus diesem Grund ist das B-Lager 10 am Topfboden 22 des Lagerschildes 7 angeordnet. Ein Lagerwechsel ist somit einfacher möglich, bei gleichzeitiger Maximierung des Bauvolumens innerhalb des Hybridlagerschildes 7.

Innerhalb des Hybridlagerschildes 7 sind vor allem die Bauelemente des Umrichters, die einer intensiveren Kühlung bedürfen, wie z.B. die Leistungselektronik an die Innenseite 20 der Seitenwand 19 des Lagerschildes 7 thermisch gekoppelt.

Die Lageraufnahme 24 des Lagers 10 ist in dieser Ausführung tubusförmig gestaltet, was eine Demontage des Lagers 10 erleichtert.

Der im Hybridlagerschild 7 angeordnete Umrichter bildet somit eine vorab montierbare Baueinheit, die lediglich noch mit dem Wicklungssystem 5 und mit dem Klemmenkasten 3 elektrisch kontaktiert werden muss.

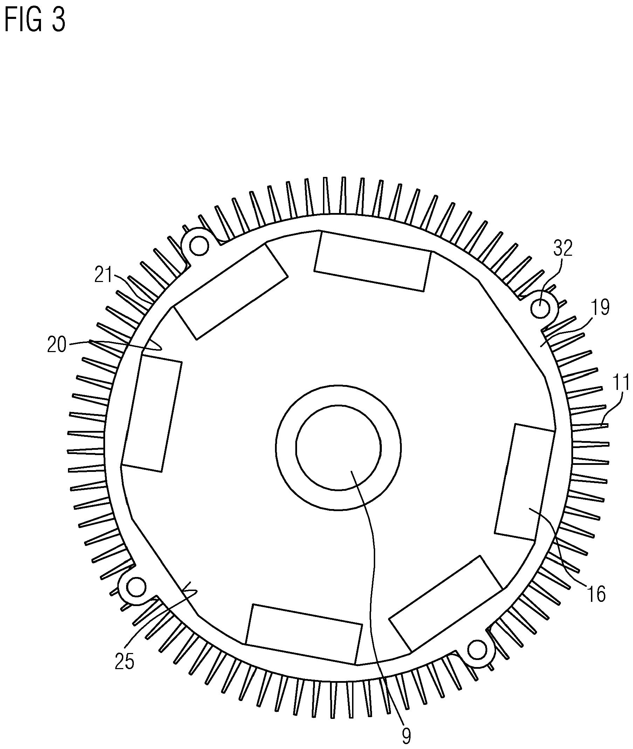

Der Topfboden 22 des B-seitigen Lagerschildes 7 ist in den FIG 2,3 eher eben ausgebildet, er kann auch komplett glatt, also in einer Ebene senkrecht zur Achse 12 ausgeführt sein. Ebenso ist es möglich, dass der Topfboden 22 als teilgeöffneter Torus ausgeführt ist.

Die tubusförmige Lageraufnahme 24 und der Topfboden 22 des Lagerschildes 7 sind einstückig ausgebildet sind. Die Kühlrippen 11 an der Außenseite 21 der Seitenwand 19 sind abschnittsweise parallel angeordnet und aufgrund des Herstellprozesses - Stranggießen - ebenfalls einstückig mit der Seitenwand 19 ausgebildet.

FIG 3 zeigt einen Querschnitt des Antriebs 30 im Bereich des Lagerschildes 7. Neben dem Wellendurchgang 9 im Lagerschild 7 sind auch plane Flächen 25 an der- in diesem Fall - polygonalen Innenseite 20 der Seitenwand 19 des Lagerschildes 7 zu erkennen, an die besonders die Leistungshalbleiter 13 des Umrichters angeordnet werden. Dort sind die Leistungshalbleiter 13 des Umrichters besonders einfach und effizient thermisch ankoppelbar.

Die planen Flächen 25 sind nach FIG 3 umfänglich an der Innenseite 19 der Seitenwand 20 des Lagerschildes 7 vorgesehen. Die Anzahl dieser planen Flächen 25 richtet sich nach der Anzahl der Leistungshalbleiter oder nach der Anzahl der wärmeintensiven Wärmequellen und vereinfacht die thermische Anbindung.

Axial an der B-Seite des Antriebs 30 kann ein Eigen- oder Fremdlüfter vorgesehen werden, der einen Kühlluftstrom generiert, der durch eine optionale Lüfterhaube geführt wird. Der Luftstrom wird über eine Ansaugöffnung in der Haube im Bereich des B-seitigen Wellenendes einem Lüfter zugeführt und axial über die Kühlrippen 11, 33 der Seitenwand 19 und/oder des Gehäuses 2 geführt.

Die Seitenwand 19 des Hybridlagerschildes 7 insbesondere an der B-Seite ist aus thermisch gut leitfähigem Material, so dass die Verlustwärme der Bauelemente des Umrichters, insbesondere der Leistungshalbleiter, wie z.B. der IGBTs 16 an den planen Flächen 25 an die Außenseite 21 der Seitenwand 20 und/oder einen Kühlluftstrom abgebbar ist. Zusätzliche Kühlrippen 33, 11 am Gehäuse 2 und/oder an der Außenseite 21 der Seitenwand 20 des Lagerschildes 7, erhöhen den Wärmeabgabeeffekt, insbesondere wenn, eine Lüfterhaube den Kühlluftstrom leitet.

Vorteilhafterweise sind die Kühlrippen 11 der Seitenwand 19 des Lagerschildes 7 und die Kühlrippen 33 des Gehäuses 2 der dynamoelektrischen rotatorischen Maschine 1 in axialer Flucht, um somit dem Kühlluftstrom möglichst wenig Strömungswiderstand entgegenzusetzen.

Eine Kühlung des Antriebs 30 und seiner jeweiligen Abschnitte/Teile/Komponenten erfolgt durch eine oder mehrere Kühleinheiten, die auch als Flüssigkeitskühlung (Kühlmantel am Gehäuse 2 der dynamoelektrischen rotatorischen Maschine 1 und/oder am Lagerschild 7 realisiert werden kann.

Ebenso ist es möglich, innerhalb des topfähnlich gestalteten Hybridlagerschildes 7 einen oder mehrere Innenlüfter vorzusehen, die innerhalb des Bauvolumens des Hybridlagerschildes 7 rotieren und dort zu einer Luftverwirbelung führen, was die Bauelemente des Umrichters zusätzlich kühlt. Der Innenlüfter ist dabei entweder separat als Fremdlüfter temperaturabhängig ansteuerbar, oder magnetisch mit der Welle 8 gekoppelt, so dass eine Art Eigenbelüftung erfolgt, sobald sich die Welle 8 dreht.

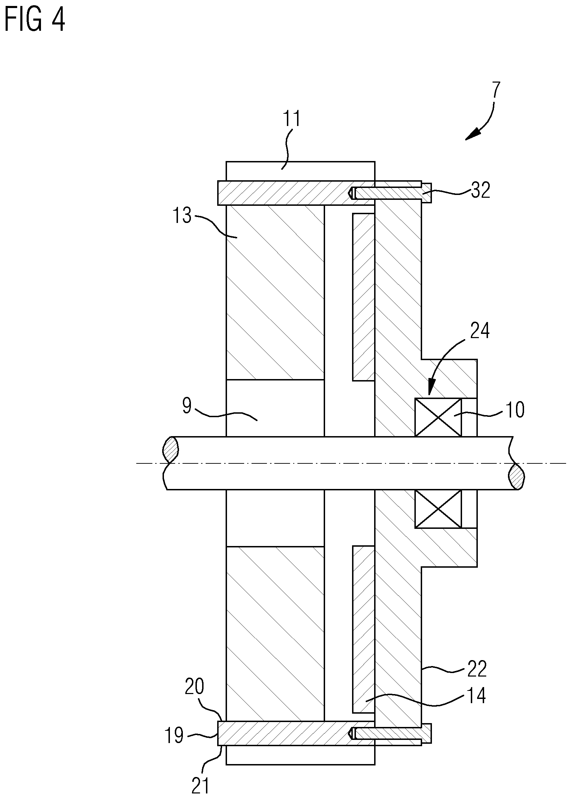

FIG 4 zeigt in einem Längsschnitt das topfähnlich ausgeführte Hybridlagerschild 7, bei dem die Seitenwand 19 aus einem thermisch vergleichsweise gut leitenden Material, mittels eines Aluminiumstrangpressverfahrens hergestellt ist und der Topfboden aus einem Aluminiumdruckgussverfahren hergestellt ist.

Dieses B-seitige Lagerschild 7 ist somit als Hybridlagerschild ausgebildet, dessen Teile, wie Seitenwand 19 und Topfboden 22 an die jeweiligen Materialanforderungen optimal angepasst sind.

Das Hybridlagerschild 7 weist somit an seiner Seitenwand 19 ein stranggepresstes Aluminium mit Kühlrippen 11 an der Außenseite 21 zur Kühlung und Geometrien an der Innenseite 20 zur Aufnahme und thermischen Anbindung der Leistungselektronik 13 auf. Der Topfboden 22 des B-seitigen Lagerschildes 7 und insbesondere dessen Nabenbereich ist aus druckgegossenem Aluminium und für die Befestigung weiterer Elektronikkomponenten des Umrichters und der Lagernabe zur Lageraufnahme 24 des B-seitigen Lagers geeignet.

Durch die Ausgestaltung des B-seitigen-Lagerschildes als Hybridlagerschild 7 können somit die besten Eigenschaften der Materialien an der richtigen Stelle (Seitenwand 19, Topfboden 22) eingesetzt werden.

Die Leistungselektronik 13 ist somit in das Lagerschild 7, insbesondere die Seitenwand 19 integriert, so dass die Bauteile mit den größten Verlusten am besten gekühlt werden. Vor allem die IGBTs 16 sind demnach an der thermisch gut wärmeleitenden Seitenwand 19 thermisch angebunden. Die Außenseite 21 der Seitenwand 19 mit Kühlrippen 11 ausgestattet, sorgt insbesondere mit einer Luftkühlung für gute Kühlung der Leistungselektronik 13. Die Seitenwände 19 aus Strangpressaluminium weisen einen Wärmeleitwert von 200-220 W/mK auf und haben damit gegenüber dem gegossenen Aluminium im Nabenbereich einen um 100 W/mK höheren thermischen Leitwert. Im Topfboden 22, insbesondere dem Nabenbereich des B-seitigen-Lagerschildes 7 wird erfindungsgemäß Aluminiumdruckguss eingesetzt, welches die erforderliche Festigkeit aufweist und verschiedene erforderliche Geometrien für die Lageraufnahme 24 und die Steuerungskomponenten des Umrichters zulässt.

Beide Teile des B-seitigen Lagerschildes 7, wie Seitenwand 19 und Topfboden 22 werden im Vorfeld miteinander verbunden. Das kann durch Schweißen, Kleben, Schrumpfen, oder direktes Angießen erfolgen. Ebenso sind lösbare Verbindungen, wie Schrauben denkbar.

Die mechanische Bearbeitung des gesamten B-seitigen Lagerschildes 7 kann dann in einer Aufspannung erfolgen, da die beiden Lagerschildkomponenten Seitenwand 19 und Topfboden 22 im Rohzustand schon miteinander verbunden wurden. Damit können bessere Qualität und geringere Herstellungskosten erzielt werden.

Durch den Strangpressprozess der Seitenwand 19 können Kühlrippen 11 an der Außenseite 21 der Seitenwand 19 sehr filigran ausgeführt werden. Dies erhöht die thermisch aktive Oberfläche und trägt somit zu einer verbesserten Kühlung der dort thermisch angebundenen Leistungselektronik 13 bei.

### Bezugszeichenliste

- 1: dynamoelektrische Maschine
- 2: Gehäuse
- 3: Klemmenkasten
- 4: Stator
- 5: Wicklungssystem
- 6: Rotor
- 7: B-seitiges Lagerschild
- 8: Welle
- 9: Wellendurchgang
- 10: BS-Lager
- 11: Kühlrippen
- 12: Achse
- 13: Leistungselektronik
- 14: Steuerelektronik
- 15: Kontaktierung, Leistungselektronik zum Wicklungssystem
- 16: IGBT
- 17: Kontaktierung Klemmenkasten Umrichter
- 19: Seitenwand, Lagerschild
- 20: Innenseite der Seitenwand
- 21: Außenseite der Seitenwand
- 22: Topfboden Lagerschild
- 23: Luftspalt
- 24: Lageraufnahme
- 25: plane Fläche
- 30: Antrieb
- 31: AS-Lager
- 32: Befestigungselement
- 33: Kühlrippen Gehäuse

## Patentansprüche

1. Antrieb (30) mit
- zumindest einer dynamoelektrischen rotatorischen Maschine (1), die in einem Gehäuse (2) angeordnet ist, mit einem in einem Stator (4) angeordneten Wicklungssystem (5) und einem durch einen Luftspalt (23) davon getrennten Rotor (6), der über zumindest ein Lager (10) eines B-seitigen topfähnlichen Lagerschilds (7) um eine Achse (12) drehbar gelagert ist,
- zumindest einem Umrichter, wobei der Umrichter zumindest einige der folgenden Bauelemente, wie Leistungshalbleiter, Drosseln, Kondensatoren, Steuer- und Regeleinheiten und Kommunikationseinheiten in einem Bauvolumen aufweist, die zumindest abschnittsweise von dem B-seitigen Lagerschild (7) radial umgeben sind und dabei zumindest einige Bauelemente des Umrichters mit dem Lagerschild (7) thermisch leitend verbunden sind, indem insbesondere wärmeintensive Bauelemente (13) des Umrichters, an einer Innenseite (20) der Seitenwand (19) des topfähnlichen Lagerschildes (7) angeordnet sind,
- wobei der Umrichter, axial betrachtet, zwischen der dynamoelektrischen rotatorischen Maschine (1) und dem Lager des B-seitigen topfähnlichen Lagerschilds (7) angeordnet ist.

2. Antrieb (30) nach Anspruch 1, **dadurch gekennzeichnet, dass** die Seitenwand (19) und der Topfboden (22) des B-seitigen Lagerschildes (7) unterschiedliche Materialien und/oder Wärmeleitfähigkeit aufweisen.

3. Antrieb (30) nach Anspruch 2, **dadurch gekennzeichnet, dass** die Seitenwände (19) des B-seitigen Lagerschildes (7) aus einem Aluminium-Strangpress-Verfahren und der Topfboden (22) des B-seitigen Lagerschildes (7) aus Aluminium-Druckguss-Verfahren hergestellt ist.

4. Antrieb (30) nach einem der vorhergehenden Ansprüche, **dadurch gekennzeich** n e t, dass die Leistungshalbleiter des Umrichters, wie IGBTs in thermisch direkt leitfähigem Kontakt mit dem der Seitenwand (19) des topfähnlichen Lagerschildes (7) stehen, indem die IGBTs in axial verlaufenden, tangential ausgerichteten Taschen (18) an der Innenseite (20) der Seitenwand (19) des topfähnlichen Lagerschilds (7) angeordnet sind und/oder dass zwischen den IGBTs und der Innenseite (20) des topfähnlichen Lagerschilds (7) ein wärmeleitfähiger Verguss vorhanden ist.

5. Antrieb (30) nach einem der vorhergehenden Ansprüche, **dadurch gekennzeichnet, dass** das Lagerschild (7) zumindest an seiner Außenseite (21) abschnittsweise Kühlrippen (11) aufweist.

6. Antrieb (30) nach einem der vorhergehenden Ansprüche, **dadurch gekennzeichnet, dass** das Gehäuse (2) der dynamoelektrischen rotatorischen Maschine (1) zumindest abschnittsweise axial verlaufende Kühlrippen (33) aufweist.

7. Antrieb (30) nach Anspruch 6, **dadurch gekennzeichnet, dass** die Kühlrippen (11) an der Seitenwand (19) des Lagerschildes (7) und die Kühlrippen (33) des Gehäuses (2) axial fluchten.

8. Antrieb (30) nach einem der vorhergehenden Ansprüche, **dadurch gekennzeichnet, dass** der Topfboden (22) des B-seitigen Lagerschildes (7) mit der Seitenwand (19) des B-seitigen Lagerschildes (7) mittels Schweißen, Kleben, Schrauben, Schrumpfen, oder direktem Angießen verbunden ist.

9. Antrieb (30) nach einem der vorhergehenden Ansprüche, **dadurch gekennzeichnet, dass** der Antrieb (30) u.a. bei Kompressoren, Lüftern, Verdichtern, Pumpen im industriellen Umfeld und bei Mobilitätsanwendungen als Kompaktantrieb eingesetzt wird.
